# EUROPEAN PATENT APPLICATION

(11) **EP 2 343 448 A1**
(43) Veröffentlichungstag der Anmeldung: **13.07.2011**
(21) Anmeldenummer: 09843116.6
(22) Anmeldetag: 08.04.2009
(51) Int. Cl.: F03B 13/16

(54) **WELLENKRAFTWERK**

(71) Anmelder: Ship Ltd., Tallinn 13625 (EE); Shpinev, Igor Nikolaevich, Tallinn 13625 (EE)
(72) Erfinder: The designation of the inventor has not yet been filed
(74) Vertreter: Jeck, Anton
(86) Internationale Anmeldenummer: PCT/RU2009/000166
(87) Internationale Veröffentlichungsnummer: WO 2010/117291

(57) **Zusammenfassung**

Die Wellenenergieanlage dient zur Umsetzung der Energie der gestörten Wasseroberfläche in elektrischen Strom. Diese Umsetzung wird durch einen auf der Wasseroberfläche schwimmenden Verdrängungskörper ausgeführt. Im Verdrängungskörper ist ein Stromerzeuger installiert, welcher spontan durch die Spannkraft eines Seils angefahren wird. Das Seil verbindet den Verdrängungskörper mit einem schwimmenden Tauchanker. Die Spannkraft des Seils entsteht jedes Mal, wenn der unter der Wirkung einer Auftriebskraft (Archimedisches Prinzip) auftauchende Verdrängungskörper in der Gravisphäre der Erde aufsteigt. Die freie (unabhängige vom Boden) Ausrichtung des Tauchankers unter dem Verdrängungskörper erlaubt den Einsatz der Anlage in großen Tiefen der See, wo die größte Energie der Wellen vorliegt.

## Beschreibung

Die Erfindung betrifft eine Wellenenergieanlage nach dem Oberbegriff des Anspruchs 1.

Die Erfindung ist zur Gewinnung von elektrischem Strom mittels Verwertung der kinetischen sowie der potentiellen Energie von Oberflächenwellen des Weltmeeres anwendbar.

Aus dem Stand der Technik sind technische Lösungen bekannt, in denen eine Spannkraft eines Seils bzw. einer Kette benutzt wird. Die Spannkraft entsteht dann, wenn auf einer Welle ein schwimmender Verdrängungskörper hochsteigt. Der Verdrängungskörper ist mittels des Seils mit einem anderen Körper verbunden, welcher am Wasserbeckenboden befestigt ist.
(s.:
1. Patent EP 1 342 916 A1 - System zur Energieerzeugung aus den Meerwellen;
2. Patent DE 602 18 900 T2 - Einheit zur Stromerzeugung unter Nutzung der Wellenkraft).

Aus dem Stand der Technik ist auch ein durch die Meereswellen getriebener Stromerzeuger bekannt. Er zeichnet sich durch folgende Merkmale aus: Ein Verdrängungskörper ist mittels eines Seils mit einem Anker verbunden. Der Anker ist am Wasserbeckenboden verankert. Wenn der Verdrängungskörper mit der Welle auftaucht, so läuft das Seil von der Spule ab und treibt somit den mit der Spule über ein Schaltgetriebe verbundenen Erzeuger an (s. Patent DE 20 2006 010 897 U1; Klasse F 03 B 13/18; veröffentlicht am 27.12.2007).

Diese Vorrichtung ist als Prototyp der Erfindung gewählt.

Es ist Aufgabe der Erfindung, die Leistung der Anlage (nachfolgend der Einrichtung) dank ihrem Betrieb in großen Tiefen der Tiefsee, in denen die höchste Wellenenergie vorliegt, zu steigern und eine Anwendung der Anlage auf Schwimmmitteln und auf anderen Objekten, die sich in der Tiefsee befinden, z. B. auf Rettungsflößen, Bohrplattformen u. a. m. zu ermöglichen.

Die gestellte Aufgabe wird durch die Merkmale des Anspruchs 1 gelöst.

Die erfindungsgemäße Wellenenergieanlage hat bekannterweise einen Verdrängungskörper mit einem darauf aufgestellten Stromerzeuger, welcher über ein Getriebe und eine Überholungskupplung mit einer Spule verbunden ist, wobei die Spule mit einer Aufspulvorrichtung ausgerüstet ist und wobei ein Seil an der Spule befestigt, darauf aufgespult und mit einem Anker verbunden ist.

Nach der Erfindung ist der Anker als schwimmender Tauchanker ausgebildet, um die Wellenenergieanlage zur Leistungssteigerung der sich auf hoher See befindlichen Schwimmmittel zu benutzen.

Vorteilhafte Weiterbildungen sind den Unteransprüchen zu entnehmen.

Dabei ist zur Steigerung der Effizienz bei der Stromerzeugung die Wellenenergieanlage mit einem Seilwegbegrenzer versehen. Der Stromerzeuger ist als einfacher Stromerzeuger, als Umkehrosmose-Entsalzungsanlage oder als Pumpe ausgebildet.

Die Erfindung wird anhand eines Ausführungsbeispiels in der Zeichnung näher erläutert. Es zeigt:

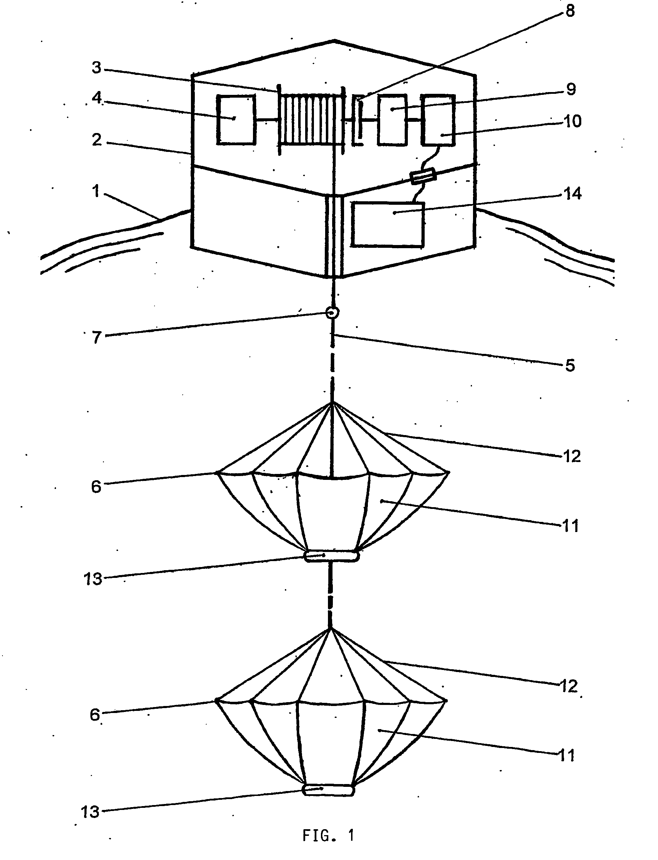

Fig. 1 das Schaltbild einer Wellenenergieanlage.

Die Einrichtung umfasst einen frei auf der Wasseroberfläche 1 schwimmenden Verdrängungskörper 2. Auf dem Verdrängungskörper 2 ist eine Spule 3 aufgestellt. Die Spule 3 ist mit einem Rückstellwerk (nachfolgend - Aufspulvorrichtung) 4 ausgerüstet. Die Aufspulvorrichtung 4 bringt die Spule 3 in die Ausgangsstellung zurück. Auf die Spule 3 ist ein Seil 5 aufgewickelt, welches daran befestigt ist. Das freie Seilende 5 ist mit einem schwimmenden Tauchanker 6 verbunden. Die Einrichtung kann mit einem Seilwegbegrenzer 7 ausgerüstet sein. Der Seilwegbegrenzer 7 verhindert die Verkürzung des freien Seilendes 5 bis zu einer Länge, die kürzer als die Wellenlänge ist. Die Spule 3 ist über die Überholungskupplung 8 mit einem Getriebe 9 (Schaltgetriebe, stufenloses Getriebe, Verteilergetriebe) verbunden. Das Getriebe 9 ist auf den Stromerzeuger 10 aufgesetzt. Ein Tauchanker 6 kann z. B. als in der Wassertiefe frei schwimmende Kuppel 11 mit Leinen 12 ausgebildet sein. Die Kuppeln 11 werden mittels der Leinen 12 am Seil 5 befestigt. Der Tauchanker 6 weist auch Gewichte 13 auf, die im unteren Teil der Kuppeln 6 befestigt sind. Die Gewichte 13 sorgen für das Tauchen (Versenkung) der Kuppeln 11 bei der Abspannung des Seils 5.

Die Funktionsweise der Einrichtung ist wie folgt:
Wenn kein Wellengang vorliegt, kann der Zustand verschiedener Vorrichtungen der Einrichtung folgenderweise beschrieben werden: Der Verdrängungskörper 2 schwimmt auf der Wasseroberfläche 1 frei. Das Seil 5 ist um eine Länge abgespult,
welche durch die Einstellung des Seilwegbegrenzers 7 festgelegt ist. Das Seil 5 ist durch Gewichte 13 unter dem Verdrängungskörper 2 gespannt. Das an der Spule 3 befestigte Ende des Seils 5 ist auf die Spule 3 aufgewickelt. Das Seil 5 ist durch die Aufspulvorrichtung 4 völlig eingezogen.

Bei einem Wellengang auf der Wasseroberfläche 1 wird die Zusammenwirkung der Vorrichtungen der Einrichtung folgenderweise beschrieben.

Wenn am Verdrängungskörper 2 auf der Oberfläche 1 eine auf ihn anlaufende See in beliebiger Richtung auftaucht, beginnt der Verdrängungskörper 2, den Tauchanker 6 nach oben zu ziehen. Die Kuppeln 11 gehen auf. Dabei entsteht eine Widerstandskraft. Die Widerstandskraft spannt das Seil 5 und lässt es von der Spule 3 ablaufen, indem die Kraft der Aufspulvorrichtung 4 überwunden wird. Die Spule 3 gibt die Drehung über die Überholungskupplung 8 auf das Getriebe 9 weiter, welches den Rotor des Stromerzeugers 10 in drehende Bewegung bringt. Dabei fängt der Stromerzeuger 10 an, elektrische Energie zu erzeugen. Diese Energie kann entweder verarbeitet und in Speicherbatterien 14 gespeichert werden (die Speicherbatterien 14 sind unmittelbar im Verdrängungskörper 2 der Einrichtung installiert), und/oder die Energie kann auf ein anderes Schwimmmittel oder ein Objekt weitergeleitet werden, welches in Bezug auf die Küste oder den Boden unbeweglich ist. Wenn der Verdrängungskörper 2 von der ablaufenden Welle abrollt, lässt die Spannung des Seils 5 nach. Die

Überholungskupplung 8 hört auf, die Drehung auf das Getriebe 9 weiterzugeben. Der Stromerzeuger 10 dreht sich noch infolge der Trägheit der Baugruppen des eigentlichen Stromerzeugers 10 sowie der Bestandteile des Getriebes 9 eine Zeit lang um. Die Aufspulvorrichtung 4 wählt im Folgebetrieb ein beliebiges dabei entstehendes Seil 5 aus und zwar bis zu dem Zeitpunkt, wenn der Seilwegbegrenzer 7 anspricht. Die Gewichte 13 fangen an unterzugehen. Dabei werden die Kuppeln 11 des Tauchankers 6 zusammengerollt und bringen das Seil 5 in die Lage ,,unter dem Körper" hinter sich mit. Der schwimmende Tauchanker 6 wiederholt gleichzeitig die senkrechten Bewegungen des Verdrängungskörpers 2 der Einrichtung. Somit erfüllt der schwimmende Tauchanker 6 am freien Ende des Seils 5 zugleich drei Funktionen:
- die Herstellung der erforderlichen Spannung des Seils 5 bei der Bewegung des Verdrängungskörpers 2 von der tiefsten Stelle der Welle zum Wellenkamm,
- die Sicherstellung einer ununterbrochenen Einsatzbereitschaft des Seils 5: Es kann die Zugbelastung bei der Bewegung des Verdrängungskörpers 2 vom Wellenkamm zur tiefsten Stelle der Welle jederzeit aufnehmen, und
- die Stabilisierung der räumlichen Lage des Verdrängungskörpers 2: Dadurch kann der Verdrängungskörper 2 an die Wasseroberfläche 1 in einem kritischen Zeitpunkt einer anlaufenden Welle gedrückt werden. Auf diese Weise ist ein evtl. Umkippen des Verdrängungskörpers 2 vermieden, und die Funktion der Baugruppen der Einrichtung ist optimiert.

Der Seilwegbegrenzer 7 verhindert eine Verkürzung des freien Endes des Seils 5 (das Seil 5 kann dadurch nicht in den Verdrängungskörper 2 eingezogen werden) bis zu einer Größe, die kürzer als die Wellenlänge ist. Der Seilwegbegrenzer 7 stellt die Erfüllung der Bedingung sicher, bei der sich der Tauchanker 6 der Einrichtung außerhalb des Bereichs der Wasserteilchenschwankungen in der Welle befindet. Somit ist die größte Spannungskraft des Seils 5 zwischen den zusammenwirkenden Körpern und dem Tauchanker 6 bedingt.

Um eine große Spannungskraft des Seils 5 und ein optimales Drehmoment auf der Achse des Stromerzeugers 10 abzustimmen und um eine wirkungsvolle Energieabnahme sicherzustellen, können N (Menge) Stromerzeuger 10 an das Getriebe 9 über ein Verteilergetriebe angeschlossen werden und Schwungräder aufweisen.

## Patentansprüche

1. Wellenenergieanlage mit einem Verdrängungskörper (2) mit einem darauf aufgestellten Stromerzeuger (10), welcher über ein Getriebe (9) und eine Überholungskupplung (8) mit einer Spule (3) verbunden ist, wobei die Spule (3) mit der Überholungskupplung (8) ausgerüstet ist und wobei ein Seil (5) an der Spule (3) befestigt, darauf aufgespult und mit einem Anker verbunden ist,
**dadurch gekennzeichnet,**
**dass** der Anker als schwimmender Tauchanker (6) ausgebildet ist, um die Wellenenergieanlage zur Leistungssteigerung auf hoher See befindlichen Schwimmmitteln zu steigern.

2. Wellenenergieanlage nach Anspruch 1,
**dadurch gekennzeichnet,**
**dass** sie mit einem Seilwegbegrenzer (7) versehen ist, um die Betriebseffizienz des Stromerzeugers (10) zu erhöhen.

## Geänderte Patentansprüche

### Geänderte Ansprüche nach Art. 19.1 PCT

**1.** Wellenenergieanlage mit einem Verdrängungskörper mit der darauf aufgestellten verfahrenstechnischen Arbeitsmaschine, welche über das Getriebe und die Überholungskupplung mit einer Spule verbunden ist; wobei die Spule mit einer Aufspulvorrichtung ausgerüstet ist, und wobei an der Spule ein Seil befestigt, darauf aufgespult und mit dem Anker verbunden ist,
**dadurch gekennzeichnet,**
**dass** der Anker als ein schwimmender Tauchanker ausgebildet ist, um die Leistung zu steigern und den Einsatz der Wellenenergieanlage in den sich in der hohen See befindlichen Schwimmmitteln zu ermöglichen.

**2.** Wellenenergieanlage nach Anspruch 1,
**dadurch gekennzeichnet,**
**dass** sie mit dem Seilwegbegrenzer versehen ist, um die Betriebseffizienz der verfahrenstechnischen Arbeitsmaschine zu erhöhen.

**3.** Wellenenergieanlage nach Anspruch 1 und 2,
**dadurch gekennzeichnet,**
**dass** die verfahrenstechnische Arbeitsmaschine als ein elektrischer Stromerzeuger ausgebildet ist.

**4.** Wellenenergieanlage nach Anspruch 1 und 2,
**dadurch gekennzeichnet,**
**dass** die verfahrenstechnische Arbeitsmaschine als eine Umkehrosmose-Entsalzungsanlage ausgebildet ist.

**5.** Wellenenergieanlage nach Anspruch 1 und 2,
**dadurch gekennzeichnet,**
**dass** die verfahrenstechnische Arbeitsmaschine als eine Pumpe ausgebildet ist.

Erklärung nach Art. 19.1 PCT
Die Änderungen in den Ansprüchen können in der Beschreibung der Erfindung folgenderweise zur Geltung kommen:

1.1. Absatz der Beschreibung: Das Wort ,,elektrischer Strom" sollte durch den Ausdruck ,,Energie der Abtriebswelle" ersetzt werden;

2. In der Darlegung der Aufgabe der Erfindung sollte nach dem Wort "Betrieb" der Ausdruck "außerhalb der Offshore-Bereiche (Schelf-Bereiche)" hinzugefügt werden;

3. Der Begriff Stromerzeuger (10) sollte überall im Text durch den Begriff "verfahrenstechnische Arbeitsmaschine (10)" ersetzt werden;

4. Der Text "Dabei fängt der Stromerzeuger an, die elektrische Energie zu erzeugen. Diese Energie kann entweder verarbeitet und in den Speicherbatterien (14) gespeichert werden" sollte durch den Text "Dabei fängt die verfahrenstechnische Arbeitsmaschine (10) an, Nutzarbeit zu leisten. Das Ergebnis dieser Nutzarbeit kann entweder verarbeitet und in Behältern (14) gespeichert werden".

Die Zeichnung bedarf keiner Änderungen.
